# EUROPÄISCHE PATENTSCHRIFT

(11) **EP 3 156 656 B1**
(45) Veröffentlichungstag und Bekanntmachung des Hinweises auf die Patenterteilung: **25.03.2020**
(21) Anmeldenummer: 15190085.9
(22) Anmeldetag: 16.10.2015
(51) Int. Cl.: F04D 15/02

(54) **PUMPENSTEUERVERFAHREN UND DRUCKERHÖHUNGSVORRICHTUNG**
PUMP CONTROL METHOD AND PRESSURE INCREASING DEVICE
PROCEDE DE COMMANDE DE POMPE ET DISPOSITIF D'AUGMENTATION DE PRESSION

(43) Veröffentlichungstag der Anmeldung: 19.04.2017
(73) Patentinhaber: Grundfos Holding A/S, 8850 Bjerringbro (DK)
(72) Erfinder: Dissing, Torben Thorsager, 8850 Bjerringbro (DK)
(74) Vertreter: Patentanwälte Vollmann Hemmer Lindfeld Partnerschaft mbB

(56) Entgegenhaltungen:
- EP-A1- 1 403 522
- WO-A1-2014/175248
- DE-B- 1 024 362
- JP-A- H10 318 181
- JP-A- 2011 027 118

## Beschreibung

Die Erfindung betrifft ein Pumpensteuerverfahren zum Steuern zumindest einer Druckerhöhungspumpe und eine Druckerhöhungsvorrichtung.

Den Ausgangspunkt der Erfindung bilden solche Vorrichtungen, in denen ein flüssiges Fördermedium mittels mindestens einer Druckerhöhungspumpe ausgangsseitig der Vorrichtung auf ein Druckniveau gebracht wird, welches höher als das Druckniveau eingangsseitig der Vorrichtung ist. Derartige, nachfolgend als Druckerhöhungsvorrichtungen bezeichnete Vorrichtungen werden zum Beispiel in Wasserversorgungsnetzen in solchen Fällen verwendet, in denen der Netzdruck nicht ausreicht oder ausreichend stabil ist, das Wasser zu höher gelegenen Abnehmern, beispielsweise in Hochhäusern oder höher gelegenen Ortsteilen zu befördern.

Diese Druckerhöhungsvorrichtungen sind typischerweise so ausgelegt, dass mit ihnen ein ausgangsseitig der Druckerhöhungsvorrichtung gefordertes Druckniveau in einem gewissen Druckbereich aufrechterhalten werden kann. Dementsprechend sind die in solchen Druckerhöhungsvorrichtungen verwendeten Druckerhöhungspumpen derart dimensioniert, dass sie unter der Annahme eines vorgegebenen Eingangsdrucks einen Förderdruck bereitstellen können, mit dem das ausgangsseitig der Druckerhöhungsvorrichtung geforderte Druckniveau verwirklicht werden kann und zwischen einem unteren und einem oberen Grenzwert gehalten werden kann. Zu diesem Zweck werden die Druckerhöhungspumpen immer dann eingeschaltet, wenn das Druckniveau ausgangsseitig der Druckerhöhungsvorrichtung unter den unteren Grenzwert sinkt, und bei Erreichen des oberen Grenzwerts wieder ausgeschaltet. Falls der Eingangsdruck der Druckerhöhungspumpen allerdings auf einen Wert sinkt, bei dem der untere Grenzwert für den ausgangsseitig der Druckerhöhungspumpen geforderten Ausgangsdruck selbst bei maximalen Pumpen-Differenz-Druck nicht erreicht werden kann, hat dies zur Folge, dass die Druckerhöhungspumpen bei maximaler Pumpenleistung, verbunden mit entsprechend hohem Energieverbrauch, Pumpenverschleiß und einer Erhitzung des Fördermediums, zeitlich unbegrenzt weiterlaufen, ohne die hinsichtlich des ausgangsseitig der Druckerhöhungsvorrichtung bereitzustellenden Druckniveaus erforderliche Wirkung zu erzielen.

Selbst wenn man bei dieser Vorgehensweise nach dem Einschalten der Druckerhöhungspumpen eine maximale Zeitspanne zum Erreichen des ausgangsseitig der Druckerhöhungsvorrichtung geforderten Druckniveaus vorgibt und die Druckerhöhungspumpen nach Ablauf dieser Zeitspanne abschaltet, ergeben sich hieraus keine gravierenden Vorteile, da die Druckerhöhungspumpen dann, wenn das ausgangsseitig der Druckerhöhungspumpen geforderte Druckniveau nicht in der vorgegebenen Zeitspanne erreicht wird, umgehend neu gestartet werden und die Einschaltdauer der Druckerhöhungspumpen somit nur unwesentlich verringert wird.

EP 1 403 522 A1 offenbart Eichmittel für Füllstandsmesser mit einem Verfahren zur Erfassung eines Differenzdruckes. DE 1 024 362 offenbart ein Verfahren und eine Einrichtung zur selbstständigen Steuerung von Pumpwerken mit kleinem Windkessel. Gemäß diesem Verfahren erfolgt ein Einschalten eines Umwälzpumpenaggregates druckabhängig, während das Abschalten zeitabhängig erfolgt.

Aus JP H10 318181 ist ein Verfahren zur Steuerung einer Wasserversorgungseinrichtung bekannt, gemäß dem eine Pumpe gestartet wird, wenn der Druck unterhalb eines vorgegebenen Druckwertes abfällt. Ein entsprechendes Verfahren ist aus JP 2011 027118 A bekannt.

Vor diesem Hintergrund besteht die Aufgabe der Erfindung darin, ein Pumpensteuerverfahren zum Steuern zumindest einer Druckerhöhungspumpe und eine Druckerhöhungsvorrichtung mit zumindest einer Druckerhöhungspumpe zur Verfügung zu stellen, mit welchen deutlich geringere Einschaltzeiten der zumindest einen Druckerhöhungspumpe insbesondere bei einem zu niedrigen Eingangsdruck realisierbar sind.

Der verfahrensmäßige Teil dieser Aufgabe wird durch ein Pumpensteuerverfahren mit den in Anspruch 1 angegebenen Merkmalen gelöst, während zur Lösung des vorrichtungsmäßigen Teils dieser Aufgabe eine Druckerhöhungsvorrichtung mit den in Anspruch 9 angegebenen Merkmalen vorgeschlagen wird. Vorteilhafte Weiterbildungen des Pumpensteuerverfahrens nach Anspruch 1 und der Druckerhöhungsvorrichtung nach Anspruch 9 ergeben sich aus den entsprechenden Unteransprüchen, der nachfolgenden Beschreibung sowie aus der beigefügten Zeichnung.

Das erfindungsgemäße Pumpensteuerverfahren dient zum Steuern mindestens einer Druckerhöhungspumpe. Somit können mit dem Pumpensteuerverfahren je nach Anwendungsfall eine oder mehrere Druckerhöhungspumpen gesteuert werden, wobei nachfolgend lediglich von einer Druckerhöhungspumpe die Rede sein wird, hierunter gegebenenfalls aber auch mehrere, miteinander zusammenwirkende Druckerhöhungspumpen zu verstehen sind, die mittels des Pumpensteuerverfahrens gesteuert werden.

Bei dem erfindungsgemäßen Pumpensteuerverfahren wird die Druckerhöhungspumpe eingeschaltet, wenn ihr Ausgangsdruck auf einen unteren Grenzwert abfällt, und ausgeschaltet, wenn ihr Ausgangsdruck einen oberen Grenzwert erreicht. Unter dem Ausgangsdruck ist hierbei der Druck zu verstehen, der ausgangsseitig der Druckerhöhungspumpe herrscht, wobei dieser Ausgangsdruck bei eingeschalteter Druckerhöhungspumpe typischerweise mit dem Eingangsdruck addiert mit dem Förderdruck der Druckerhöhungspumpe übereinstimmt. Der obere und untere Grenzwert des Ausgangsdrucks markieren hierbei vorzugsweise den Bereich, in dem der Druck ausgangsseitig der Druckerhöhungspumpe möglichst gehalten werden sollte.

Das erfindungsgemäße Pumpensteuerverfahren zeichnet sich dadurch aus, dass in einem Fall, in welchem der bei Betrieb der Druckerhöhungspumpe erreichbare maximale Ausgangsdruck unterhalb des unteren Grenzwerts liegt, der untere Grenzwert für den Ausgangsdruck verringert wird. Demzufolge wird der Wert für den unteren Grenzwert des Ausgangsdrucks ausgangsseitig der Druckerhöhungspumpe dann herabgesetzt, wenn per se absehbar ist, dass der bei eingeschalteter Druckerhöhungspumpe erreichbare maximale Ausgangsdruck bzw. der Förderdruck der Druckerhöhungspumpe nicht geeignet ist, den Ausgangsdruck über diesen unteren Grenzwert zu erhöhen. Obwohl sich diese Maßnahme nicht auf den ausgansseitig der Druckerhöhungspumpe geforderten Ausgangsdruck auswirkt, hat sie aber gegenüber der bislang üblichen Vorgehensweise, bei der ein unterer Grenzwert für den Ausgangsdruck feststehend vorgegeben ist, den Vorteil, dass die Laufzeit der Druckerhöhungspumpe gegenüber dem bislang üblichen Vorgehen durch die Herabsetzung des unteren Grenzwerts für den Ausgangsdruck deutlich verringert wird, was wiederum mit einer Verringerung des Energieverbrauchs und Verschleißes der Druckerhöhungspumpe sowie mit einer geringeren Wärmeaufnahme des Fördermediums in der Druckerhöhungspumpe einhergeht.

Wenn bei Betrieb der Druckerhöhungspumpe der erreichbare maximale Ausgangsdruck unterhalb des unteren Grenzwerts für den Ausgangsdruck liegt, wird der untere Grenzwert bevorzugt in Abhängigkeit des bei Betrieb der Druckerhöhungspumpe erreichbaren maximalen Ausgangsdruck verringert. Demzufolge wird bei dem erfindungsgemäßen Pumpensteuerverfahren die Entscheidung, in welchem Maße der untere Grenzwert für den Ausgangsdruck herabzusetzen ist, vorzugsweise davon abhängig gemacht, welcher maximaler Ausgangsdruck bei eingeschalter Druckerhöhungspumpe gegenwärtig überhaupt realisierbar ist.

In vorteilhafter Weiterbildung dieser Vorgehensweise, d.h. bei der Verringerung des unteren Grenzwerts, wenn der bei Betrieb der Druckerhöhungspumpe erreichbare maximale Ausgangsdruck unterhalb des unteren Grenzwerts liegt, wird der untere Grenzwert auf einen Wert verringert, welcher niedriger als der bei Betrieb der Druckerhöhungspumpe aktuell erreichbare maximale Ausgangsdruck ist. Das Ziel dieser Maßnahme besteht darin, dass mit dem Einschalten der Druckerhöhungspumpe dann, wenn der Ausgangsdruck auf den neu festgelegten unteren Grenzwert gesunken ist, überhaupt eine Erhöhung des Ausgangsdrucks verbunden ist, bei welcher der Ausgangsdruck bei den gegebenen Bedingungen den größtmöglichen Wert, d.h. den bei Betrieb der Druckerhöhungspumpe erreichbaren maximalen Ausgangsdruck annimmt.

Weiter vorteilhaft ist bei dem erfindungsgemäßen Pumpensteuerverfahren vorgesehen, dass der untere Grenzwert auf einen Wert verringert wird, welcher um einen vorbestimmten Differenzwert niedriger als der bei Betrieb der Druckerhöhungspumpe aktuell erreichbare maximale Ausgangsdruck ist. Die Größe des Differenzwerts kann sich hierbei zweckmäßigerweise nach dem gegenwärtig an der Druckerhöhungspumpe anliegenden Eingangsdruck richten. So kann der Differenzwert so festgelegt werden, dass der dann neu eingestellte untere Grenzwert für den Ausgangsdruck zumindest den Wert des gegenwärtig an der Druckerhöhungspumpe anliegenden Eingangsdruckes annimmt, sinnvollerweise aber nicht unterhalb dieses Eingangsdrucks liegt.

Sobald der Eingangsdruck der Druckerhöhungspumpe so groß ist, dass der Förderdruck der Druckerhöhungspumpe oberhalb des anfangs vorgegebenen unteren Grenzwerts für den Eingangsdruck liegt, ist eine zuvor vorgenommene Herabsetzung dieses unteren Grenzwerts als nachteilig anzusehen, da diese mit sehr großen verbrauchsbedingten Schwankungen des Ausgangsdrucks verbunden ist. Vor allem aus diesem Grunde ist bei dem erfindungsgemäßen Pumpensteuerungsverfahren vorteilhaft vorgesehen, dass der untere Grenzwert auf einen vorgegebenen Ausgangswert zurückgesetzt wird, wenn der bei Betrieb der Druckerhöhungspumpe erreichbare maximale Ausgangsdruck über diesem vorgegebenen Ausgangswert und insbesondere um eine vorbestimmte Differenz über diesem vorgegebenen Ausgangswert liegt.

Gemäß einer weiteren bevorzugten Weiterbildung des erfindungsgemäßen Pumpensteuerverfahrens wird die Druckerhöhungspumpe in einem Fall, in welchem der bei Betrieb der Druckerhöhungspumpe erreichbare maximale Ausgangsdruck unterhalb des oberen Grenzwerts liegt, nach einer vorbestimmten Zeitspanne abgeschaltet. Das heißt, wenn der Förderdruck der Druckerhöhungspumpe unterhalb des oberen Grenzwerts des Ausgangsdrucks liegt, wird die Druckerhöhungspumpe nur in einem festgelegten Zeitintervall in Betrieb genommen, wodurch sich vorteilhafterweise die Betriebsdauer der Druckerhöhungspumpe gegenüber der bislang üblichen Vorgehensweise weiter verringern lässt. Des Weiteren ist die Vorgabe einer Zeitspanne bis zum Abschalten der Druckerhöhungspumpe insbesondere dann von Vorteil, wenn der untere Grenzwert für den Ausgangsdruck bereits verringert worden ist und sich in der Zeitspanne bis zum Abschalten der Druckerhöhungspumpe herausstellt, dass im Folgenden bei Betrieb der Druckerhöhungspumpe ein höherer Ausgangsdruck realisierbar ist, so dass der untere Grenzwert für den Ausgangsdruck vergleichsweise schnell wieder vergrößert werden kann

Bei dem erfindungsgemäßen Pumpensteuerverfahren ist es vor allem im Hinblick auf eine ggf. vorzunehmende Herabsetzung des unteren Grenzwerts des Ausgangsdrucks von besonderer Bedeutung, Kenntnis von dem bei Betrieb der Druckerhöhungspumpe erreichbaren maximalen Ausgangsdruck zu haben. In diesem Zusammenhang ist vorteilhaft vorgesehen, dass der bei Betrieb der Druckerhöhungspumpe erreichbare maximale Ausgangsdruck im Betrieb erfasst wird oder berechnet wird. Eine Berechnung des bei Betrieb der Druckerhöhungspumpe erreichbaren maximalen Ausgangsdrucks kann hierbei zweckmäßigerweise auf der Grundlage der Leistungsdaten der Druckerhöhungspumpe sowie auf dem an der Druckerhöhungspumpe anliegenden Eingangsdruck oder durch Hochrechnung des Druckverlaufs ausgangsseitig der Druckerhöhungspumpe erfolgen. Zur Erfassung des bei Betrieb der Druckerhöhungspumpe erreichbaren maximalen Ausgangsdrucks kann ferner ausgangsseitig der Druckerhöhungspumpe vorteilhaft ein Drucksensor angeordnet sein, mit welchem der Ausgangsdruck der Druckerhöhungspumpe zumindest während der Betriebsdauer der Druckerhöhungspumpe gemessen wird. Zweckmäßigerweise wird ein solcher Drucksensor gleichzeitig zur kontinuierlichen Drucküberwachung zum Ein- und Ausschalten der Druckerhöhungspumpe genutzt.

Neben dem vorab beschriebenen Pumpensteuerverfahren ist auch eine zur Durchführung des Pumpensteuerverfahrens ausgebildete Druckerhöhungsvorrichtung Gegenstand der Erfindung. Diese Druckerhöhungsvorrichtung weist zumindest eine Druckerhöhungspumpe auf, bei der es sich vorzugsweise um eine mehrstufige Kreiselpumpe handelt. Darüber hinaus verfügt die Druckerhöhungsvorrichtung über eine Steuereinrichtung. Diese Steuereinrichtung weist einen Speicher auf, in dem ein oberer und ein unterer Grenzwert, das heißt ein oberer und ein unterer Grenzwert für einen ausgangsseitig der Druckerhöhungspumpe anliegenden Ausgangsdruck gespeichert sind. Die Steuereinrichtung dient zur Steuerung der Druckerhöhungspumpe, wobei sie die Druckerhöhungspumpe derart steuert, dass sie die Druckerhöhungspumpe einschaltet, wenn ihr Ausgangsdruck auf den unteren Grenzwert abfällt und ausschaltet wenn ihr Ausgangsdruck den oberen Grenzwert erreicht. Bei der Steuereinrichtung handelt es sich vorzugsweise um eine elektronische Steuereinrichtung.

Besonders an der erfindungsgemäßen Druckerhöhungsvorrichtung ist es, dass die Steuereinrichtung ein Anpassungsmodul zur Anpassung des unteren Grenzwerts für den Ausgangsdruck aufweist, welches derart ausgebildet ist, dass in einem Fall, in welchem der bei Betrieb der Druckerhöhungspumpe erreichbare maximale Ausgangsdruck unterhalb des unteren Grenzwerts für den Ausgangsdruck liegt, der untere Grenzwert verringert und in dem Speicher gespeichert wird. Das Anpassungsmodul ist somit dazu vorgesehen bzw. dazu ausgebildet, den in dem Speicher gespeicherten unteren Grenzwert für den Ausgangsdruck bei Bedarf auf der Grundlage des bei Betrieb der Druckerhöhungspumpe erreichbaren maximalen Ausgangsdrucks zu verändern und diesen veränderten unteren Wert für den Ausgangsdruck zur Speicherung an den Speicher weiterzuleiten oder diesen Wert selbst in dem Speicher zu speichern. Um die Speicherung des geänderten Werts für den Ausgangsdruck in dem Speicher speichern zu können, ist der Speicher zweckmäßigerweise ein Schreib-Lese-Speicher, in dem ein vorab gespeicherter unterer Wert für den Ausgangsdruck mit einem von dem Anpassungsmodul angepassten, neuen unteren Wert für den Ausgangsdruck überschrieben werden kann.

Die Kenntnis des bei Betrieb der Druckerhöhungspumpe erreichbaren maximalen Ausgangsdrucks ist eine wesentliche Voraussetzung dafür, dass mit dem Anpassungsmodul der untere Wert für den Ausgangsdruck an die jeweils herrschenden Betriebsbedingungen der Druckerhöhungsanlage in sinnvoller Weise angepasst werden kann. Insbesondere zu diesem Zweck weist die Steuereinrichtung vorteilhaft ein Berechnungsmodul auf, das dazu ausgebildet ist, den bei Betrieb der Druckerhöhungspumpe erreichbaren maximalen Ausgangsdruck zu berechnen. Bei dem Berechnungsmodul handelt es sich um einen Teil der Steuereinrichtung, dessen Bauteilarchitektur derart ist, dass mit ihr allein oder in Verbindung mit einer geeigneten Software, zumindest die zur Berechnung des bei Betrieb der Erhöhungspumpe erreichbaren maximalen Ausgangsdrucks erforderlichen Rechenoperationen ausführbar sind. Ergeben diese Rechenoperationen, dass der bei Betrieb der Druckerhöhungspumpe erreichbare maximale Ausgangsdruck unterhalb des in dem Speicher gespeicherten unteren Grenzwerts für den Ausgangsdruck liegen wird, so wird das Anpassungsmodul der Steuereinrichtung veranlasst, den unteren Grenzwert zu verringern und entsprechend in dem Speicher zu speichern. Kommt das Berechnungsmodul aber zu dem Ergebnis, dass der bei Betrieb der Druckerhöhungspumpe erreichbare maximale Ausgangsdruck oberhalb des in dem Speicher gespeicherten unteren Grenzwerts für den Ausgangsdruck liegt, so wird der in dem Speicher gespeicherte untere Grenzwert beibehalten bzw. in einem Fall, in dem der untere Grenzwert bereits herabgesetzt worden ist, wird das Anpassungsmodul der Steuereinrichtung veranlasst, den unteren Grenzwert wieder zu dem ursprünglich gespeicherten unteren Grenzwert in dem Speicher zu ändern.

Weiter vorteilhaft ist die erfindungsgemäße Druckerhöhungsvorrichtung mit zumindest einem ausgangsseitig der zumindest einen Druckerhöhungspumpe angeordneten Drucksensor ausgestattet, welcher den Ausgangsdruck erfasst und mit der Steuereinrichtung signalverbunden ist. Hierbei sind der Drucksensor und die Steuereinrichtung zweckmäßigerweise zur zeitlichen lückenlosen Erfassung des ausgangsseitig der Druckerhöhungspumpe herrschenden Ausgangsdrucks ausgebildet, so dass die Druckerhöhungspumpe unmittelbar bei Erreichen des oberen Grenzwerts für den Ausgangsdruck ausgeschaltet werden kann und unmittelbar bei Erreichen des unteren Grenzwerts für den Ausgangsdruck eingeschaltet werden kann. Darüber hinaus können die von dem Drucksensor erfassten Druckwerte gegebenenfalls eine Berechnungsgrundlage zur Berechnung des bei Betrieb der Druckerhöhungspumpe erreichbaren maximalen Ausgangsdrucks bilden oder es kann der tatsächlich erreichbare Ausgangsdruck gemessen werden.

Nach einer weiteren bevorzugten Ausgestaltung der erfindungsgemäßen Druckerhöhungsvorrichtung ist das Anpassungsmodul derart ausgebildet, dass es in dem Fall, in welchem der bei Betrieb der Druckerhöhungspumpe erreichbare maximale Ausgangsdruck unterhalb des unteren Grenzwertes liegt, den unteren Grenzwert verringert und insbesondere auf einen niedrigeren Wert als den erreichbaren maximalen Ausgangsdruck verringert. Hierbei greift das Anpassungsmodul zweckmäßigerweise über eine Signalverbindung zwischen dem Anpassungsmodul und dem Berechnungsmodul auf den von dem Berechnungsmodul ermittelten Wert für den bei Betrieb der Druckerhöhungspumpe erreichbaren maximalen Ausgangsdruck oder auf einen gemessenen maximalen Ausgangsdruck zurück.

Des Weiteren ist das Anpassungsmodul bevorzugt derart ausgebildet, dass es den unteren Grenzwert auf einen vorgegebenen, in dem Speicher der Steuereinrichtung gespeicherten Ausgangswert zurücksetzt und in dem Speicher der Steuereinrichtung speichert, wenn der bei Betrieb der Druckerhöhungspumpe erreichbare maximale Ausgangsdruck über diesem vorgegebenen Ausgangswert und insbesondere um eine vorbestimmte Differenz über diesem vorgegebenen Ausgangswert liegt. Auch in diesem Fall kommuniziert das Anpassungsmodul vorteilhaft mit dem Berechnungsmodul, das den Wert für den bei Betrieb der Druckerhöhungspumpe erreichbaren maximalen Ausgangsdruck ermittelt oder mit dem Drucksensor, welcher den Wert erfasst.

Neben dem unteren und dem oberen Grenzwert für den Ausgangsdruck ist in dem Speicher der Steuereinrichtung bevorzugt auch eine maximale Zeitspanne für den Betrieb der Druckerhöhungspumpe ohne Erreichen des oberen Grenzwertes gespeichert. Hierbei ist die Steuereinrichtung zweckdienlich derart ausgebildet, dass sie in einem Fall, in welchem der bei Betrieb der Druckerhöhungspumpe erreichbare maximale Ausgangsdruck unterhalb des oberen Grenzwerts liegt, die Druckerhöhungspumpe nach dieser maximalen Zeitspanne abschaltet. Zu diesem Zweck verfügt die Steuereinrichtung günstigerweise über eine Zeitschaltung, die den Zeitpunkt bestimmt, zu dem die Steuereinrichtung die Druckerhöhungspumpe abschaltet.

Nachfolgend ist die Erfindung anhand eines in der Zeichnung dargestellten Ausführungsbeispiels näher erläutert. In der Zeichnung zeigt:
- Fig. 1: in einer schematisch stark vereinfachten Prinzipskizze eine Druckerhöhungsvorrichtung und
- Fig. 2: in drei getrennten Koordinatensystemen den zeitlichen Verlauf des Ausgangs- und Eingangsdrucks einer Druckerhöhungspumpe der Druckerhöhungsvorrichtung nach Fig. 1 sowie die Einschaltdauer der Druckerhöhungspumpe.

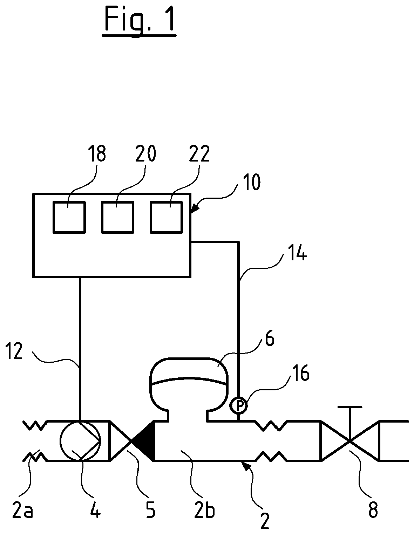

In Fig. 1 ist eine Versorgungsleitung 2 dargestellt, in welche eine Druckerhöhungspumpe 4 integriert ist. Die Druckerhöhungspumpe 4, welche Teil einer Druckerhöhungsvorrichtung ist, dient dazu, ein durch die Versorgungsleitung 2 geleitetes flüssiges Fördermedium von einem in einem Bereich 2a der Versorgungsleitung 2 eingangsseitig der Druckerhöhungspumpe 4 herrschenden Druckniveau in einem Bereich 2b der Versorgungsleitung 2 ausgangsseitig der Druckerhöhungspumpe 4 auf ein höheres Druckniveau zu befördern. Ausgangsseitig der Druckerhöhungspumpe 4 sind an der Versorgungsleitung 2 ein Rückschlagventil 5 und ein Speichertank 6 sowie ein Absperrventil 8 angeordnet. Es sei darauf hingewiesen, dass der Speichertank 6 nicht erfindungsrelevant ist und gegebenenfalls weggelassen werden kann. Z.B. können stattdessen elastische Rohre in dem System vorhanden sein.

Zur Steuerung der Druckerhöhungspumpe 4 ist eine Steuereinrichtung 10 vorgesehen, welche mit der Druckerhöhungspumpe 4 über eine Leitung 12 signalverbunden ist. Wie die Druckerhöhungspumpe 4, ist auch die Steuereinrichtung 10 Teil einer Druckerhöhungsvorrichtung. Die Steuereinrichtung 10 ist zudem über eine Leitung 14 mit einem Drucksensor 16 signalverbunden, der den ausgangsseitig der Druckerhöhungspumpe 4 herrschenden Ausgangsdruck im Bereich 2b der Versorgungsleitung 2 erfasst. Wesentliche Bestandteile der Steuereinrichtung 10 sind ein Speicher 18, ein Anpassungsmodul 20 sowie ein Berechnungsmodul 22, auf deren Bedeutung nachfolgend ausführlich eingegangen wird.

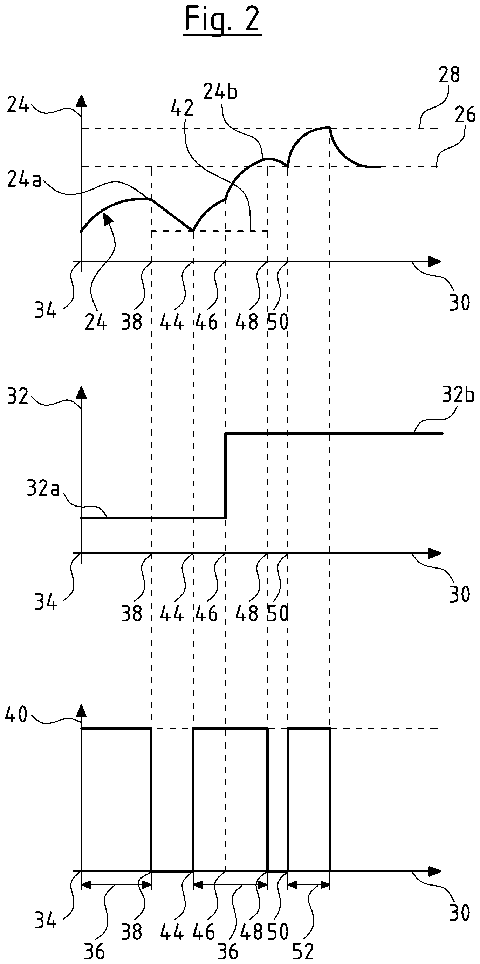

Die in Fig. 1 dargestellte Druckerhöhungsvorrichtung dient dazu, mittels der Druckerhöhungspumpe 4 in dem Bereich 2b der Versorgungsleitung 2 einen Ausgangsdruck 24 aufrechtzuerhalten, welcher möglichst zwischen einem unteren Grenzwert 26 und einem oberen Grenzwert 28 liegen soll und den oberen Grenzwert 28 nicht überschreiten soll. Dieser Sachverhalt wird aus dem oberen Koordinatensystem in Fig. 2 deutlich, in dem der Ausgangsdruck 24 über die Zeit 30 aufgetragen ist. Der untere Grenzwert 26 (unterer Ausgangsdruckgrenzwert 26) und der obere Grenzwert 28 (oberer Ausgangsdruckgrenzwert 28) für den Ausgangsdruck 24 sind in dem Speicher 18 der Steuereinrichtung 10 gespeichert.

Normalerweise wird ein oberhalb des Grenzwerts 26 liegender Ausgangsdruck 24 dadurch realisiert, dass die Steuereinrichtung 10 die Druckerhöhungspumpe 4 dann einschaltet, wenn der Ausgangsdruck 24 unterhalb des Grenzwerts 26 liegt und dann ausschaltet, wenn der Ausgangsdruck 24 den oberen Grenzwert 28 erreicht. Fällt nun der Ausgangsdruck 24 durch Öffnen des Absperrventils 8 in dem Bereich 2b der Versorgungsleitung 2 wieder auf einen Wert unterhalb des unteren Grenzwerts 26, so veranlasst die Steuereinrichtung 10 erneut ein Einschalten der Druckerhöhungspumpe 4.

Ein Ausgangsdruck 24 oberhalb des unteren Grenzwerts 26 ist allerdings nur ab einem bestimmten, in dem Bereich 2a der Versorgungsleitung 2 herrschenden Eingangsdruck 32 der Druckerhöhungspumpe 4 möglich. Ein solcher Eingangsdruck 32b geht aus dem mittleren Koordinatensystem der Fig. 2 hervor, in dem ein möglicher Verlauf des Eingangsdruckes 32 über die Zeit 30 dargestellt ist. Liegt der Eingangsdruck 32 unter dem Wert 32b, wie in dem mittleren Koordinatensystem der Fig. 2 anhand des Werts 32a dargestellt, so lässt sich der Ausgangsdruck 24 nicht auf einen Wert oberhalb des unteren Grenzwerts 26 erhöhen. Dieser Sachverhalt wird nun anhand der Fig. 1 und 2 erläutert.

Wie in Fig. 2 dargestellt, wird die Druckerhöhungspumpe 4 zu einem Zeitpunkt 34 von der Steuereinrichtung 10 eingeschaltet. Hierbei liegt in dem Bereich 2a der Versorgungsleitung 2 eingangsseitig der Druckerhöhungspumpe 4 der Eingangsdruck 32a an. Die Druckerhöhungspumpe 4 wird nur für eine vorgegebene, in dem Speicher 18 der Steuereinrichtung 10 ebenfalls gespeicherte maximale Zeitspanne 36 betrieben und nach Ablauf der Zeitspanne 36 zu einem Zeitpunkt 38 wieder ausgeschaltet, da der obere Grenzwert 28 nicht erreicht wird. Dies geht aus dem unteren Koordinatensystem der Fig. 2 hervor, in dem die Einschaltung 40 der Druckerhöhungspumpe 4 über die Zeit 30 dargestellt ist. Während der Zeitspanne 36 wird in dem Berechnungsmodul 22 der Steuereinrichtung 10 der bei dem vorliegenden Eingangsdruck 32a maximal erreichbare Ausgangsdruck 24a berechnet, der unterhalb des unteren Grenzwerts 26 liegt. Ein zwischen den Grenzwerten 26 und 28 liegender Ausgangsruck 24 ist somit derzeit nicht realisierbar. Das Anpassungsmodul 20 veranlasst daher eine Verringerung des unteren Grenzwerts 26 auf den Grenzwert 42 (geänderter unterer Ausgangsdruckgrenzwert), der niedriger als der derzeit maximal erreichbare Ausgangsdruck 24a ist. Dieser neue untere Grenzwert 42 wird nun in dem Speicher 18 der Steuereinrichtung 10 gespeichert.

Die Druckerhöhungspumpe 4 bleibt solange abgeschaltet, bis der Ausgangsdruck 24 auf dem neuen unteren Grenzwert 42 abgefallen ist. Dies ist zu einem Zeitpunkt 44 der Fall. Zu diesem Zeitpunkt 44 wird die Druckerhöhungspumpe 4 wieder eingeschaltet und bleibt für eine weitere maximale Zeitspanne 36 im Betrieb, da der obere Grenzwert 28 wiederum nicht erreicht wird. Während dieser Zeitspanne 36, zu einem Zeitpunkt 46 erhöht sich der Eingangsdruck 32 von dem Wert 32a auf den Wert 32b. Hierdurch kann sich der Ausgangsdruck 24 wieder bis oberhalb des ursprünglichen unteren Grenzwerts 26 erhöhen, so dass sich nach Ablauf der Zeitspanne 36, zu einem Zeitpunkt 48 ein zuvor von dem Berechnungsmodul 22 berechneter Ausgangsdruck 24b ergibt.

Das Anpassungsmodul 20 der Steuereinrichtung 10 veranlasst nun, dass in dem Speicher 18 der Steuereinrichtung 10 der untere Grenzwert 42 wieder zu dem ursprünglichen unteren Grenzwert 26 geändert und gespeichert wird. Die Druckerhöhungspumpe 4 bleibt nun solange ausgeschaltet, bis der Ausgangsdruck 24 auf den unteren Grenzwert 26 gefallen ist. Dies ist zu einem Zeitpunkt 50 der Fall, bei dem die Druckerhöhungspumpe 4 wieder von der Steuereinrichtung 10 eingeschaltet wird. Nach einer Zeitspanne 52, die kürzer als die in dem Speicher 18 gespeicherte Zeitspanne 36 ist, erreicht der Ausgangsdruck 24 den oberen Grenzwert 28, so dass die Steuereinrichtung 10 die dann grundsätzlich vorgesehene Abschaltung der Druckerhöhungspumpe 4 veranlasst. Die Druckerhöhungspumpe 4 bleibt nun solange abgeschaltet, bis der Ausgangsdruck 24 auf den unteren Grenzwert 26 abgefallen ist. Bei Erreichen des unteren Grenzwerts 26 wird die Druckerhöhungspumpe 4, wieder von der Steuereinrichtung 10 eingeschaltet, wobei sich die vorab beschriebenen Vorgänge wiederholen.

### Bezugszeichenliste

- 2: Versorgungsleitung
- 2a, 2b: Bereich
- 4: Druckerhöhungspumpe
- 5: Rückschlagventil
- 6: Speichertank
- 8: Absperrventil
- 10: Steuereinrichtung
- 12: Leitung
- 14: Leitung
- 16: Drucksensor
- 18: Speicher
- 20: Anpassungsmodul
- 22: Berechnungsmodul
- 24, 24a, 24b: Ausgangsdruck
- 26: Grenzwert, unterer Ausgangsdruckgrenzwert
- 28: Grenzwert, oberer Ausgangsdruckgrenzwert
- 30: Zeit
- 32: Eingangsdruck
- 32a, 32b: Wert, Eingangsdruckwert
- 34: Zeitpunkt
- 36: maximale Zeitspanne
- 38: Zeitpunkt
- 40: Einschaltung
- 42: Grenzwert, geänderter unterer Ausgangsdruckgrenzwert
- 44: Zeitpunkt
- 46: Zeitpunkt
- 48: Zeitpunkt
- 50: Zeitpunkt
- 52: Zeitspanne

## Patentansprüche

1. Pumpensteuerverfahren zum Steuern zumindest einer Druckerhöhungspumpe (4), gemäß welchem die Druckerhöhungspumpe (4) eingeschaltet wird, wenn ihr Ausgangsdruck (24) auf einen unteren Grenzwert (26) abfällt, und ausgeschaltet wird, wenn ihr Ausgangsdruck (24) einen oberen Grenzwert (28) erreicht,
**dadurch gekennzeichnet, dass**
in einem Fall, in welchem der bei Betrieb der Druckerhöhungspumpe (4) erreichbare maximale Ausgangsdruck (24a) unterhalb des unteren Grenzwertes (26) liegt, der unterer Grenzwert (26) verringert wird.

2. Pumpensteuerverfahren nach Anspruch 1, **dadurch gekennzeichnet, dass** der untere Grenzwert (26) dann, wenn bei Betrieb der Druckerhöhungspumpe (4) der erreichbare maximale Ausgangsdruck (24a) unterhalb des unteren Grenzwertes (26) liegt, in Abhängigkeit des bei Betrieb der Druckerhöhungspumpe (4) erreichbaren maximalen Ausgangsdrucks (24a) verringert wird.

3. Pumpensteuerverfahren nach einem der vorangehenden Ansprüche, **dadurch gekennzeichnet, dass** in dem Fall, dass der bei Betrieb der Druckerhöhungspumpe (4) erreichbare maximale Ausgangsdruck (24a) unterhalb des unteren Grenzwertes (26) liegt, der unterer Grenzwert (26) auf einen Wert verringert wird, welcher niedriger als der bei Betrieb der Druckerhöhungspumpe erreichbare maximale Ausgangsdruck (24a) ist.

4. Pumpensteuerverfahren nach Anspruch 3, **dadurch gekennzeichnet, dass** der untere Grenzwert (26) auf einen Wert verringert wird, welcher um einen vorbestimmten Differenzwert niedriger als der bei Betrieb der Druckerhöhungspumpe erreichbare maximale Ausgangsdruck (24a) ist.

5. Pumpensteuerverfahren nach einem der vorangehenden Ansprüche, **dadurch gekennzeichnet, dass** der untere Grenzwert (42) auf einen vorgegebenen Ausgangswert (26) zurückgesetzt wird, wenn der bei Betrieb der Druckerhöhungspumpe (4) erreichbare maximale Ausgangsdruck (24b) über diesem vorgegebenen Ausgangswert (26) liegt.

6. Pumpensteuerverfahren nach einem der vorangehenden Ansprüche, **dadurch gekennzeichnet, dass** der untere Grenzwert (42) auf einen vorgegebenen Ausgangswert (26) zurückgesetzt wird, wenn der bei Betrieb der Druckerhöhungspumpe (4) erreichbare maximale Ausgangsdruck (24b) um eine vorbestimmte Differenz über diesem vorgegebenem Ausgangswert (26) liegt.

7. Pumpensteuerverfahren nach einem der vorangehenden Ansprüche, **dadurch gekennzeichnet, dass** in einem Fall, in welchem der bei Betrieb der Druckerhöhungspumpe erreichbare maximale Ausgangsdruck (24) unterhalb des oberen Grenzwertes (28) liegt, die Druckerhöhungspumpe (4) nach einer vorbestimmten Zeitspanne (36) abgeschaltet wird.

8. Pumpensteuerverfahren nach einem der vorangehenden Ansprüche, **dadurch gekennzeichnet, dass** der bei Betrieb der Druckerhöhungspumpe erreichbare maximale Ausgangsdruck (24) im Betrieb erfasst wird oder berechnet wird.

9. Druckerhöhungsvorrichtung mit zumindest einer Druckerhöhungspumpe (4) und einer Steuereinrichtung (10), welche einen Speieher (18) mit einem darin gespeicherten oberen Grenzwert (28) und einem darin gespeicherten unteren Grenzwert (26) aufweist und die Druckerhöhungspumpe (4) in der Weise steuert, dass sie die Druckerhöhungspumpe (4) einschaltet, wenn ihr Ausgangsdruck (24) auf den unteren Grenzwert (26) abfällt, und ausschaltet, wenn ihr Ausgangsdruck (24) den oberen Grenzwert (28) erreicht, **dadurch gekennzeichnet, dass**
die Steuereinrichtung (10) ein Anpassungsmodul (20) zur Anpassung des unteren Grenzwertes (26, 42) aufweist, welches derart ausgebildet ist, dass in einem Fall, in welchem der bei Betrieb der Druckerhöhungspumpe erreichbare maximale Ausgangsdruck (24a) unterhalb des unteren Grenzwertes (26) liegt, der unterer Grenzwert (26) verringert und in dem Speicher (18) gespeichert wird.

10. Druckerhöhungsvorrichtung nach Anspruch 9, **dadurch gekennzeichnet, dass** die Steuereinrichtung (10) ein Berechnungsmodul (22) aufweist, welches dazu ausgebildet ist, den bei Betrieb der Druckerhöhungspumpe (4) erreichbaren maximalen Ausgangsdruck (24) zu berechnen.

11. Druckerhöhungsvorrichtung nach Anspruch 9 oder 10, **gekennzeichnet durch** zumindest einen ausgangsseitig der zumindest einen Druckerhöhungspumpe (4) angeordneten Drucksensor (16), welcher den Ausgangsdruck (24) erfasst und mit der Steuereinrichtung (10) signalverbunden ist.

12. Druckerhöhungsvorrichtung nach einem der Ansprüche 9 bis 11, **dadurch gekennzeichnet, dass** das Anpassungsmodul (20) derart ausgebildet ist, dass es in dem Fall, in welchem der bei Betrieb der Druckerhöhungspumpe (4) erreichbare maximale Ausgangsdruck (24a) unterhalb des unteren Grenzwertes (26) liegt, den unterer Grenzwert (26) verringert.

13. Druckerhöhungsvorrichtung nach Anspruch 12, **dadurch gekennzeichnet, dass** das Anpassungsmodul (20) derart ausgebildet ist, dass es den unteren Grenzwert (26) auf einen niedrigeren Wert als den erreichbaren maximalen Ausgangsdruck (24a) verringert.

14. Druckerhöhungsvorrichtung nach einem der Ansprüche 9 bis 13, **dadurch gekennzeichnet, dass** das Anpassungsmodul (20) derart ausgebildet ist, dass es den unteren Grenzwert (42) auf einen vorgegebenen, in dem Speicher (18) der Steuereinrichtung (10) gespeicherten Ausgangswert (26) zurücksetzt und in dem Speicher (18) der Steuereinrichtung (10) speichert, wenn der bei Betrieb der Druckerhöhungspumpe (4) erreichbare maximale Ausgangsdruck (24b) über diesem vorgegebenen Ausgangswert (26) und insbesondere um eine vorbestimmte Differenz über diesem vorgegebenen Ausgangswert (26) liegt.

15. Druckerhöhungsvorrichtung nach einem der Ansprüche 10 bis 14, **dadurch gekennzeichnet, dass** in dem Speicher (18) der Steuereinrichtung (10) eine maximale Zeitspanne (36) für den Betrieb der Druckerhöhungspumpe (4) ohne Erreichen des oberen Grenzwertes (28) gespeichert ist und die Steuereinrichtung (10) derart ausgebildet ist, dass sie in einem Fall, in welchem der bei Betrieb der Druckerhöhungspumpe erreichbare maximale Ausgangsdruck (24) unterhalb des oberen Grenzwertes (28) liegt, die Druckerhöhungspumpe (4) nach dieser maximalen Zeitspanne (36) abschaltet.

## Claims

1. A pump control method for controlling at least one booster pump (4), according to which method the booster pump (4) is switched on when its outlet pressure (24) drops to a lower limit value (26), and is switched off when its outlet pressure (24) reaches an upper limit value (28),
**characterised in that**
the lower limit value (26) is reduced in a case in which the maximal outlet pressure (24a) which can be reached on operation of the booster pump (4) lies below the lower limit value (26).

2. A pump control method according to claim 1, **characterised in that** the lower limit value (26) is reduced in dependence on the maximal outlet pressure (24a) which can be reached on operation of the booster pump (4), when the maximal outlet pressure (24a) which can be reached on operation of the booster pump (4) lies below the lower limit value (26).

3. A pump control method according to one of the preceding claims, **characterised in that** the lower limit value (26) is reduced to a value which is lower than the maximal outlet pressure (24a) which can be reached on operation of the booster pump, in the case that the maximal outlet pressure (24a) which can be reached on operation of the booster pump (4) lies below the lower limit value (26).

4. A pump control method according to claim 3, **characterised in that** the lower limit value (26) is reduced to a value which is lower than the maximal outlet pressure (24a) which can be reached on operation of the booster pump, by a predefined difference value.

5. A pump control method according to one of the preceding claims, **characterised in that** the lower limit value (42) is reset to a predefined starting value (26) when the maximal outlet pressure (24b) which can be reached on operation of the booster pump (4) lies above this predefined starting value (26).

6. A pump control method according to one of the preceding claims, **characterised in that** the lower limit value (42) is reset to a predefined starting value (26) when the maximal outlet pressure (24b) which can be reached on operation of the booster pump (4) lies above this predefined starting value (26) by a predefined difference.

7. A pump control method according to one of the preceding claims, **characterised in that** the booster pump (4) is switched off after a predefined time duration (36), in a case in which the maximal outlet pressure (24) which can be reached on operation of the booster pump lies below the upper limit value (28).

8. A pump control method according to one of the preceding claims, **characterised in that** the maximal outlet pressure (24) which can be reached on operation of the booster pump is detected or computed, on operation.

9. A pressure-boosting device with at least one booster pump (4) and with a control device (10) which comprises a memory (18) with an upper limit value (28) which is stored therein and with a lower limit value (26) which is stored therein, said control device controlling the booster pump (4) in a manner such that it switches on the booster pump (4) when its outlet pressure (24) drops to the lower limit value (26), and switches it off when its outlet pressure (24) reaches the upper limit value (28),
**characterised in that**
the control device (10) comprises an adaptation module (20) for adapting the lower limit value (26, 42), said adaptation module being designed in a manner such that the lower limit value (26) is reduced and is stored in the memory (18), in a case in which the maximal outlet pressure (24a) which can be reached on operation of the booster pump lies below the lower limit value (26).

10. A pressure-boosting device according to claim 9, **characterised in that** the control device (10) comprises a computation module (22) which is designed to compute the maximal outlet pressure (24) which can be reached on operation of the booster pump (4).

11. A pressure-boosting device according to claim 9 or 10, **characterised by** at least one pressure sensor (16) which is arranged at the exit side of the at least one booster pump (4), detects the outlet pressure (24) and is signal-connected to the control device (10).

12. A pressure-boosting device according to one of the claims 9 to 11, **characterised in that** the adaptation module (20) is designed in a manner such that in the case, in which the maximal outlet pressure (24a) which can be reached on operation of the booster pump (4) lies below the lower limit value (26), it reduces the lower limit value (26).

13. A pressure-boosting device according to claim 12, **characterised in that** the adaptation module (20) is designed in a manner such that it reduces the lower limit value (26) to a value lower than the achievable maximal outlet pressure (24a).

14. A pressure-boosting device according to one of the claims 9 to 13, **characterised in that** the adaptation module (20) is designed in a manner such that it resets the lower limit value (42) to a predefined starting value (26) stored in the memory (18) of the control device (10) and stores it in the memory (18) of the control device (10), when the maximal outlet pressure (24b) which can be reached on operation of the booster pump (4) lies above this predefined starting value (26) and in particular lies above this predefined starting value (26) by a predefined difference.

15. A pressure-boosting device according to one of the claims 10 to 14, **characterised in that** a maximal time duration (36) for the operation of the booster pump (4) without reaching the upper limit value (28) is stored in the memory (18) of the control device (10), and the control device (10) is designed in a manner such that it switches off the booster pump (4) after this maximal time duration (36), in a case, in which the maximal outlet pressure (24) which can be reached on operation of the booster pump lies below the upper limit value (28).

## Revendications

1. Procédé de commande de pompe pour commander au moins une pompe d'augmentation de pression (4), selon lequel la pompe d'augmentation de pression (4) est mise en marche lorsque sa pression de sortie (24) atteint une valeur limite inférieure (26) et est arrêtée lorsque sa pression de sortie atteint une valeur limite supérieure (28),
**caractérisé en ce que**, dans un cas où la pression de sortie maximale pouvant être atteinte (24a) lors du fonctionnement de la pompe d'augmentation de pression (4) est inférieure à la valeur limite inférieure (26), la valeur limite inférieure (26) est réduite.

2. Procédé de commande de pompe selon la revendication 1, **caractérisé en ce que**, dans le cas où, lors du fonctionnement de la pompe d'augmentation de pression (4), la pression de sortie maximale pouvant être atteinte (24a) est inférieure à la valeur limite inférieure (26), la valeur limite inférieure (26) est réduite en fonction de la pression maximale de sortie (24a) pouvant être atteinte lors du fonctionnement de la pompe d'augmentation de pression (4).

3. Procédé de commande de pompe selon l'une des revendications précédentes, **caractérisé en ce que**, dans le cas où la pression de sortie maximale (24a) pouvant être atteinte lors du fonctionnement de la pompe d'augmentation de pression (4) est inférieure à la valeur limite inférieure (26), la valeur limite inférieure (26) est réduite à une valeur qui est inférieure à la pression de sortie maximale (24a) pouvant être atteinte lors du fonctionnement de la pompe d'augmentation de pression.

4. Procédé de commande de pompe selon la revendication 3, **caractérisé en ce que** la valeur limite inférieure (26) est réduite à une valeur qui est inférieure à la pression de la sortie maximale (24a) pouvant être atteinte lors du fonctionnement de la pompe d'augmentation de pression, d'une valeur différentielle prédéterminée.

5. Procédé de commande de pompe selon l'une des revendications précédentes, **caractérisé en ce que** la valeur limite inférieure (42) est ramenée à une valeur de sortie (26) prédéterminée lorsque la pression maximale de sortie (24b) pouvant être atteinte lors du fonctionnement de la pompe d'augmentation de pression (4) est supérieure à cette valeur de sortie (26) prédéterminée.

6. Procédé de commande de pompe selon l'une des revendications précédentes, **caractérisé en ce que** la valeur limite inférieure (42) est ramenée à une valeur de sortie (26) prédéterminée lorsque la pression de sortie maximale (24b) pouvant être atteinte lors du fonctionnement de la pompe d'augmentation de pression (4) est supérieure à cette valeur de sortie (26) prédéterminée, d'une différence prédéterminée.

7. Procédé de commande de pompe selon l'une des revendications précédentes, **caractérisé en ce que**, dans un cas où la pression de sortie maximale (24) pouvant être atteinte lors du fonctionnement de la pompe d'augmentation de pression est inférieure à la valeur limite supérieure (28), la pompe d'augmentation de pression (4) est arrêtée après un laps de temps prédéterminé (36).

8. Procédé de commande de pompe selon l'une des revendications précédentes, **caractérisé en ce que** la pression de sortie maximale (24) pouvant être atteinte lors du fonctionnement de la pompe d'augmentation de pression, est saisie lors du fonctionnement ou est calculée.

9. Dispositif d'augmentation de pression avec au moins une pompe d'augmentation de pression (4) et un dispositif de commande (10) qui comprend une mémoire (18) dans laquelle sont stockées une valeur limite supérieure (28) et une valeur limite inférieure (26) et qui commande la pompe d'augmentation de pression (4) de façon telle qu'elle met la pompe d'augmentation de pression (4) en marche lorsque sa pression de sortie (24) atteint la valeur limite inférieure (26) et l'arrête lorsque sa pression de sortie (24) atteint la valeur limite supérieure (28), **caractérisé en ce que** le dispositif de commande (10) comprend un module d'adaptation (20) pour adapter la valeur limite inférieure (26, 42), lequel est configuré de façon que, dans un cas où la pression de sortie maximale pouvant être atteinte (24a) lors du fonctionnement de la pompe d'augmentation de pression est inférieure à la valeur limite inférieure (26), la valeur limite inférieure (26) est réduite et stockée dans la mémoire (18).

10. Dispositif d'augmentation de pression selon la revendication 9, **caractérisé en ce que** le dispositif de commande (10) comprend un module de calcul (22) qui est formé pour calculer la pression de sortie maximale (24) pouvant être atteinte lors du fonctionnement de la pompe d'augmentation de pression (4).

11. Dispositif d'augmentation de pression selon la revendication 9 ou 10, **caractérisé par** au moins un capteur de pression (16) monté du côté de la sortie de ladite au moins une pompe d'augmentation de pression (4), qui capte la pression de sortie (24) et est relié par un signal au dispositif de commande (10).

12. Dispositif d'augmentation de pression selon l'une des revendications 9 à 11, **caractérisé en ce que** le module d'adaptation (20) est formé de façon telle qu'il diminue la valeur limite inférieure (26) dans le cas où la pression de sortie maximale de sortie pouvant être atteinte (24a) lors du fonctionnement de la pompe d'augmentation de pression (4) est inférieure à la valeur limite inférieure (26).

13. Dispositif d'augmentation de pression selon la revendication 12, **caractérisé en ce que** le module d'adaptation (20) est formé de façon telle qu'il réduise la valeur limite inférieure (26) à une valeur inférieure à la pression maximale de sortie pouvant être atteinte (24a).

14. Dispositif d'augmentation de pression selon l'une des revendications 9 à 13, **caractérisé en ce que** le module d'adaptation (20) est formé de façon telle qu'il ramène la valeur limite inférieure (42) à une valeur de sortie (26) prédéterminée stockée dans la mémoire (18) du dispositif de commande (10) et la stocke dans la mémoire (18) du dispositif de commande (10), lorsque la pression maximale de sortie pouvant être atteinte (24b) lors du fonctionnement de la pompe d'augmentation de pression (4) dépasse cette valeur de sortie (26) prédéterminée et en particulier dépasse cette valeur de sortie (26) prédéterminée d'une différence prédéterminée.

15. Dispositif d'augmentation de pression selon l'une des revendications 10 à 14, **caractérisé en ce que**, dans la mémoire (18) du dispositif de commande (10), un laps de temps (36) maximal est stocké pour le fonctionnement de la pompe d'augmentation de pression (4) sans atteindre la valeur limite (28) supérieure et que le dispositif de commande (10) est formé de façon telle qu'il arrête la pompe d'augmentation de pression (4) après ce laps de temps maximal (36) dans un cas où la pression maximale de sortie (24) pouvant être atteinte lors du fonctionnement de la pompe d'augmentation de pression est inférieure à la valeur limite supérieure (28).
